# EUROPEAN PATENT APPLICATION

(11) **EP 4 475 099 A1**
(43) Date of publication of application: **11.12.2024**
(21) Application number: 24180151.3
(22) Date of filing: 05.06.2024
(51) Int. Cl.: G07F 17/32

(54) **GAME SYSTEM**

(30) Priority: 05.06.2023 JP 2023092779
(71) Applicant: ANGEL GROUP CO., LTD., Higashiomi-shi Shiga 527-0232 (JP)
(72) Inventor: SHIGETA, Yasushi, Higashiomi-shi, Shiga, 527-0232 (JP); MIHARA, Takanori, Seika-cho, Soraku-gun, Kyoto, 6190238 (JP)
(74) Representative: Bardehle Pagenberg Partnerschaft mbB Patentanwälte Rechtsanwälte

(57) **Abstract**

A purpose of the present invention is to provide a game system which can display on a table upper surface an image in accordance with a gaming chip placed on the table upper surface in a game system for performing a game using a physical gaming chip.

A game system (100) is a game system for performing a game using a gaming chip (9) and a playing card, and comprises: a table (1) including a table upper surface (11) including a display surface (111) configured to display an image; a camera (21, 23) configured to take a picture of the gaming chip (9) bet on the table upper surface (11) to generate a picture; a picture recognizing device (61) configured to analyze the picture and thereby recognize betting contents; a game judging device (3) configured to read contents of the playing card which is to be dealt on the table upper surface (11) to judge a game result; and an image control device (7) configured to display on the display surface (111) an image in accordance with the betting contents recognized by the picture recognizing device (61) and the game result judged by the game judging device (3).

## Description

### TECHNICAL FIELD

The present invention relates to a game system for performing a game using a gaming chip.

### BACKGROUND

Conventionally, a game system for baccarat is known which displays a chip betting area for each game participant and changes a display state of the chip betting area according to a game state as the game progresses.

Such prior art is disclosed in Japanese Patent Publication No. 2019-097908, for example.

However, in the game system disclosed in Japanese Patent Publication No. 2019-097908, it is possible to display on a betting quota at which a hitting is decided as a game progresses a notice of that effect, or display brightly or flashing on and off that betting quota, but it is not what changes a display according to an actual bet (first embodiment), and not what uses a physical gaming chip (second embodiment).

### SUMMARY OF THE INVENTION

Therefore, a purpose of the present invention is to provide a game system which can display on a table upper surface an image in accordance with a gaming chip placed on the table upper surface in a game system for performing a game using a physical gaming chip.

A game system according to an aspect of the present invention is a game system for performing a game using a gaming chip and a playing card, and has a configuration comprising: a table including a table upper surface including a display surface; a camera configured to take a picture of the gaming chip bet on the table upper surface to generate a picture; a picture recognizing device configured to analyze the picture and thereby recognize betting contents; a game judging device configured to read contents of the playing card to be dealt on the table upper surface to judge a game result; and an image control device configured to display on the display surface an image of a layout of a betting area including plural betting targets on which betting for the game is to be performed by placing the gaming chip, and display on the display surface an image whose contents change in accordance with the betting content and/or the game result according to the betting content recognized by the picture recognizing device and/or the game result judged by the game judging device.

In the above game system, the image control device may be configured to display the layout at least in a betting stage.

The above game system may further comprise a disposal sensor configured to detect that the playing card is inserted into a disposal box for disposing the playing card used in the game, and the image control device may be configured to display the layout for a next game when the disposal sensor detects the playing card.

In the above game system, the picture recognizing device may be configured to analyze the picture and thereby recognize a position, type, and number of gaming chip, and recognize a betting amount for each betting target as the betting contents based on the position, type, and number thereof.

In the above game system, the image control device may be configured to display a mark indicating that the gaming chip has been detected at the position recognized by the picture recognizing device.

In the above game system, the image control device may be configured to display a mark in accordance with the betting amount recognized by the picture recognizing device at each position recognized by the picture recognizing device.

In the above game system, the image control device may be configured to display a number indicating the betting amount recognized by the picture recognizing device near each image-recognized position.

In the above game system, the image control device may be configured to display a mark indicating that the betting amount is highest amount, in association with the betting target including the highest betting amount, for each type of betting target in the game.

In the above game system, the image control device may be configured to distinguishably display the betting target on which the gaming chip have been bet and the betting target on which the gaming chip have not been bet, after the betting stage ends and the betting contents is fixed.

In the above game system, the image control device may be configured to erase a display of the betting target on which the gaming chip have not been bet, after the betting stage ends and the betting contents is fixed.

The above game system may further comprise a settlement judging device configured to judge settlement based on the betting contents recognized by the picture recognizing device and the game result judged by the game judging device, and the image control device may be configured to display an image in accordance with the settlement judged by the settlement judging device, in a settlement stage.

In the above game system, the settlement judging device may be configured to judge whether the gaming chip should be collected or redemption for the gaming chip should be received, for each stack of the gaming chip which has been bet or for each betting target on which the gaming chip has been bet, and the image control device may be configured to perform a display indicating a judging result by the settlement judging device, whether it should be collected, in association with the stack of the gaming chip which has been bet or in association with the betting target on which the gaming chip has been bet.

In the above game system, the settlement judging device may be configured to judge a redemption amount for the gaming chip, and the image control device may be configured to display the redemption amount in association with the stack of the gaming chip for which the redemption is to be received or in association with the betting target for which the redemption is to be received.

In the above game system, the betting target may include participation in a lottery game, the game system may further comprise a lottery executing device configured to execute a lottery when the picture recognizing device recognizes that, as the betting contents, the gaming chip is bet for the participation in the lottery game, and the image control device may be configured to display an image of the lottery game.

In the above game system, the image control device may be configured to display a carry-over amount of the lottery game in the betting stage.

In the above game system, the display surface may be a screen having light transmissive property, and the image control device may be a projector configured to project the image onto the screen from below the table upper surface.

In the above game system, the image control device may be a display device configured to display the image, and the display surface may be a display panel of the display device.

In the above game system, the display surface is a screen, and the image control device may be a projector configured to project the image onto the screen from above the table upper surface.

A game system according to another aspect of the present invention is a game system for performing a game using a gaming chip, and has a configuration comprising: a table including a display surface configured to display an image wherein the display surface is a table upper surface; a camera configured to take a picture of the gaming chip placed on the table upper surface to generate a picture; a picture recognizing device configured to analyze the picture and thereby recognize a position, type, and number of gaming chip placed on the table upper surface; and an image control device configured to display on the display surface an image in accordance with a recognizing result by the picture recognizing device.

The above game system may further comprise a judging device configured to judge a game result, and the image control device may be further configured to display on the display surface an image in accordance with a judging result by the judging device.

A game system according to yet another aspect of the present invention is a game system for performing a game using a gaming chip and a playing card, and has a configuration comprising: a table including a table upper surface including a display surface configured to display an image; a camera configured to take a picture of the gaming chip bet on the table upper surface to generate a picture; a picture recognizing device configured to analyze the picture and thereby recognize betting contents; a game judging device configured to read contents of the playing card which is to be dealt on the table upper surface to judge a game result; and an image control device configured to display on the display surface an image in accordance with the betting contents recognized by the picture recognizing device and the game result judged by the game judging device.

### BRIEF DESCRIPTION OF DRAWINGS

FIG. 1 is a schematic view showing a configuration of a game system according to an embodiment of the present invention.
FIG. 2 is an external view showing a state in which the game system is used according to the embodiment of the present invention.
FIG. 3 is a perspective view showing a gaming chip according to the embodiment of the present invention.
FIG. 4 is a block diagram showing a configuration of the game system according to the embodiment of the present invention.
FIG. 5 is a view showing a display example of a display surface according to the embodiment of the present invention.
FIG. 6 is a view showing an example of a part of an image which a camera for taking a picture of the gaming chip takes a picture to generate according to the embodiment of the present invention.
FIG. 7 is a view showing a display example of the display surface according to the embodiment of the present invention.
FIG. 8 is a view showing a display example of the display surface according to the embodiment of the present invention.
FIG. 9 is a view showing a display example of the display surface according to the embodiment of the present invention.
FIG. 10 is a view showing a display example of the display surface according to the embodiment of the present invention.
FIG. 11A is a view showing a display example of the display surface according to the embodiment of the present invention.
FIG. 11B is a view showing a display example of the display surface according to the embodiment of the present invention.
FIG. 12 is a view showing an example of a picture which a camera for taking a picture of a player and a gaming chip takes a picture to generate according to the embodiment of the present invention.

### DESCRIPTION OF THE PREFERRED EMBODIMENTS

Hereinafter, embodiments according to the present invention will be described with reference to the drawings. The embodiments described below are examples in cases where implementing the present invention, and does not limit the present invention to specific configurations described below. In implementing the present invention, specific configurations according to the embodiments may be adopted appropriately.

In the following embodiments, an example in which a game system according to the present invention is applied to a baccarat game which is a game using a gaming chip and a playing card, but the game system may be applied to games other than baccarat.

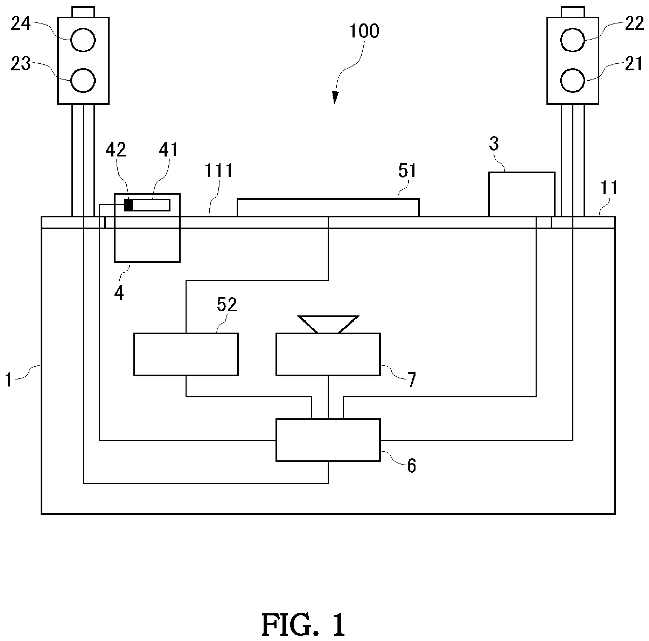

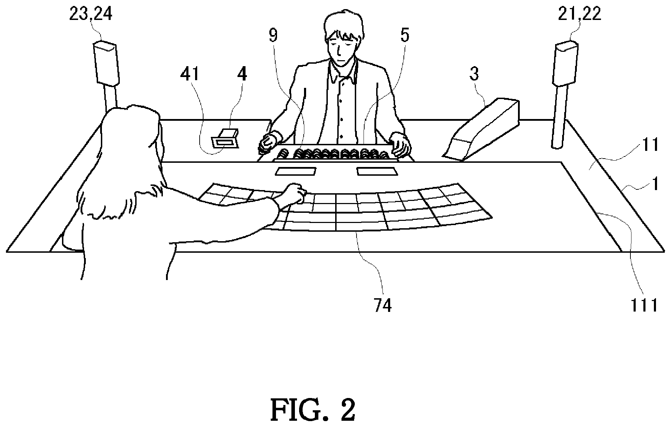

FIG. 1 is a schematic view showing a configuration of a game system according to an embodiment of the present invention, and FIG. 2 is an external view showing a state in which the game system is used according to the embodiment of the present invention. The game system 100 is provided at a gaming table 1. The gaming table 1 includes a table upper surface 11 being a flat surface. A game is performed on the table upper surface 11. The table upper surface 11 includes a display surface 111 on a part of which an image can be displayed. The "image" referred to in the present specification may be animation, or a still image whose contents is switching.

The gaming table 1 includes a dealer side on which a dealer is positioned and a player side in which plural players are positioned. Poles are provided so as to stand on both sides of the dealer side, respectively, and two cameras are mounted at an upper part of each pole. Specifically, a camera 21 for taking a picture of a gaming chip placed in a betting area 74 from the left side to generate a picture and a camera 22 for taking a picture of the gaming chip on the betting area 74 and the player from the left side to generate a picture are provided on the left side, and a camera 23 for taking a picture of the gaming chip placed on the betting area 74 from the right side to generate a picture and a camera 24 for taking a picture of the gaming chip on betting area 74 and the player from the right side to generate a picture are provided on the right side.

Any of the cameras 21 and 23 taking a picture of the betting area 74 takes a picture of the entire betting area 74. Therefore, the gaming chip 9 placed at any position in the betting area 74 is taken a picture from different angles by the cameras 21 and 23. Any of the cameras 21-24 takes a picture of the gaming chip 9 placed in the betting area 74 from diagonally above. Therefore, the camera 21-24 can recognize from the taken picture which of the betting targets arranged in a two-dimensional direction within the betting area 74 (position) the gaming chip 9 are placed on and a type thereof which is identifiable from its side surface. The gaming chip 9 may be placed on the betting area 74 in a state of a chip stack in which the plural gaming chips 9 are stacked up. The camera 21-24 takes a picture of the side surface of each gaming chip 9 in the chip stack and the upper surface of the topmost gaming chip 9.

Spatial resolutions are different between the camera 21, 23 for taking a picture of the gaming chip 9 placed in the betting area 74 and the camera 22, 24 for taking a picture of not only the gaming chip 9 but also the player. As described below, since the picture of the camera 21, 23 is used for judging the type of gaming chip 9 based on a pattern on the side surface of the gaming chip 9, its resolution is relatively high, and, in contrast, since the picture of the camera 22, 24 is used for judging a relationship between the gaming chip 9 and the player who has operated it, its resolution is relatively low.

A card shoe 3 configured to house plural decks of playing cards shuffled are placed on the dealer side of the table upper surface 11. The dealer draws the playing card one by one from the card shoe 3 for a game. A code which is not visible under visible light but becomes visible by irradiating ultraviolet light thereto is written on a front surface of the playing card. The code represents at least a rank and suit of the playing card.

A disposal box 4 for disposing of the playing card used in the game after a game end is further provided on the dealer side of the table upper surface 11. In the disposal box 4, a disposal slot 41 is exposed on the table upper surface 11, and the disposal box 4 includes a disposal sensor 42 configured to detect that the playing card is passing through the disposal slot 41.

A chip tray 5 for housing the gaming chip 9 of the dealer is further provided on the dealer side of the table upper surface 11. The dealer collects the gaming chip 9 from the betting area 74 and houses it in the chip tray 5 when the player bets and loses the game. On the other hand, the dealer pays out the gaming chip 9 of an amount in accordance with rules and a game result, for the bet gaming chip 9, from the chip tray 5 when the player bets and wins the game.

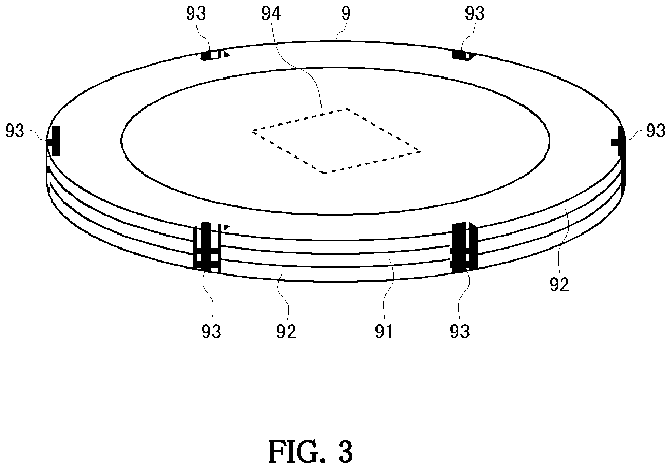

FIG. 3 is a perspective view showing the gaming chip according to the embodiment of the present invention. The gaming chip 9 has a disk shape. Three colored layers appear in a thickness direction thereof on the side surface forming a circumference. A middle layer (centerline) 91 is a color not depending on the type (value) of the gaming chip 9, and layers above and below it 92 have a color in accordance with the type. Therefore, it is possible to identify, for gaming chip 9, the type thereof by the color of the upper and lower layers 92 on the side surface thereof.

The gaming chip 9 includes plural inserts 93 extending from the side surface to the top and bottom surfaces with spaced at predetermined intervals in a circumferential direction. The insert 93 is observable from both the side surface and upper surface. The insert 93 also represents the type of gaming chip 9 (e.g., distinction whether it is a VIP chip or a mass chip, or distinction whether it is a cash chip, a rolling chip or a promotional chip) by a color and/or shape thereof.

The gaming chip 9 includes an RFID tag 94 inside thereof. The RFID tag 94 stores chip identification information uniquely identifying the gaming chip 9, information related to the type, a casino in which it is to be used, manufacture of gaming chip 9, and the like.

An antenna 51 for reading the RFID tag 94 of the gaming chip 9 housed in the chip tray 5 is installed inside the chip tray 5.

Returning to FIG. 1, the game system 100 includes an arithmetic device 6, a projector 7, and an RFID reader 52 below the table upper surface 11, i.e., inside the gaming table 1. The arithmetic device 6 is composed of a general-purpose computer and operates in accordance with a program according to the embodiment of the present invention.

The projector 7 is a device configured to project an image onto the display surface 111 and thereby control the image projected on the display surface 111, and corresponds to an image control device. The projector 7 is connected to the arithmetic device 6 and projects the image onto the display surface 111 based on control of the arithmetic device 6. The projector 7 projects the image onto the display surface 111 and thereby displays the image onto the display surface 111. The display surface 111 has a material property which transmits light (i.e., a material property of transparency or translucency). No pattern is represented on the display surface 111, and it is colorless, or it is colored in one color even though it is colored. When the projector 7 projects the image onto the display surface 111 from below, as shown in FIG. 2, the projected image is transmitted to above the display surface 111, that is, the upper surface of the display surface 111, and the projected image is displayed on the table upper surface 11.

The RFID reader 52 decodes a signal received by the antenna 51 and outputs it to the arithmetic device 6.

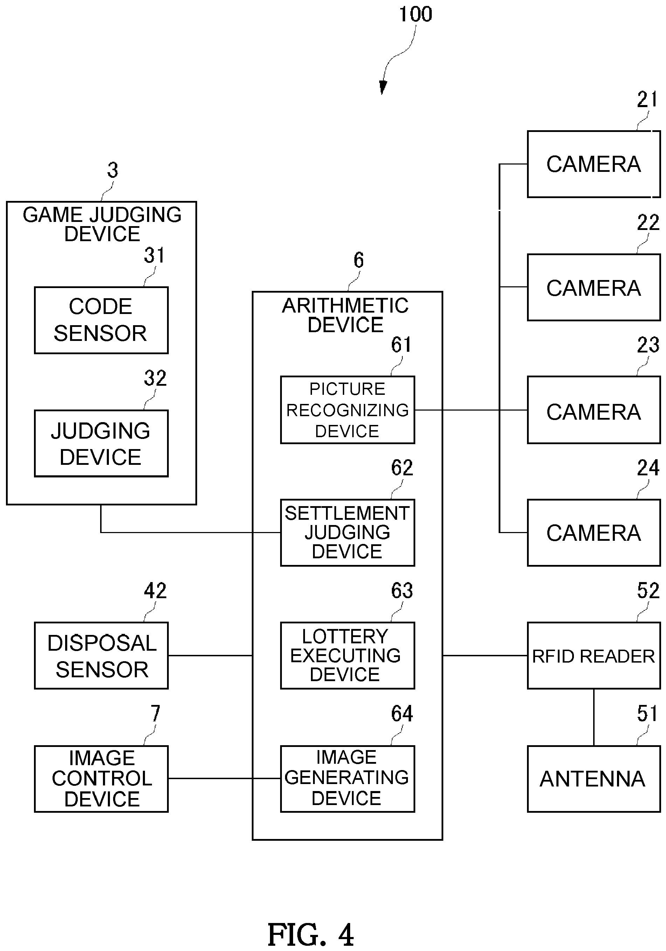

FIG. 4 is a block diagram showing a configuration of the game system according to the embodiment of the present invention. The game judging device 3 is the card shoe 3 shown in FIGs. 1 and 2. The game judging device 3 includes a configuration for reading the code of the playing card being drawn. Specifically, the card shoe 3 includes an ultraviolet lamp (not shown) configured to irradiate ultraviolet rays to a code writing part of the playing card being drawn, a code sensor 31 configured to read the code caused to be visible by ultraviolet rays, and a decoding system configured to decode the code read by the code sensor 31 to read the suit and rank of the playing card being drawn.

Furthermore, the game judging device 3 includes a judging device 32 configured to judge a game result of a baccarat game (PLAYER WIN, BANKER WIN, TIE, PLAYER PAIR, BANKER PAIR, etc.) according to baccarat rules based on the ranks read sequentially from the plural playing cards which have been drawn sequentially.

The arithmetic device 6 functions as a picture recognizing device 61, a settlement judging device 62, a lottery executing device 63, and an image generating device 64 by executing a table game program according to the present embodiment. The table game program may be stored in a non-transitory storage medium, and is read therefrom to be installed in the arithmetic device 6. The picture recognizing device 61 analyzes the pictures generated by the cameras 21-24 and thereby recognizes betting contents. The image generating device 64 generates an image according to the betting contents recognized by the picture recognizing device 61, and a game stage and the game result judged by the game judging device 3.

The image control device 7 is the projector 7 shown in FIG. 2. The image control device 7 projects the image generated by the image generating device 64 onto the display surface 111 and thereby displays it on the display surface 111. Hereinafter, the generation of the image by the image generating device 64 and the display of the image by the image control device 7 will be described specifically.

First, the image generating device 64 generates an image of the betting area 74 including the plural betting targets in a betting stage, and the image control device 7 displays this image on the display surface 111. When the disposal of the playing card used in a previous game is detected by the disposal sensor 42, the image generating device 64 responds to it to recognize that a betting stage of a next game staters and generates an image of the betting area 74.

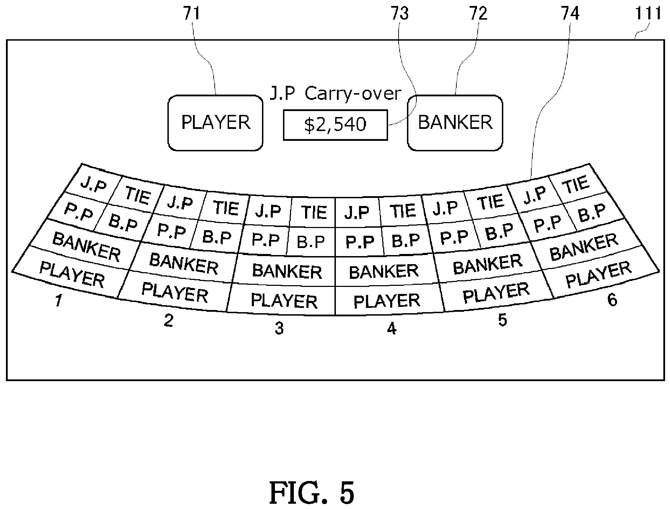

FIG. 5 is a view showing a display example of the display surface according to the embodiment of the present invention. In the betting stage, the display surface 111 shows a layout shown in FIG. 5. This layout includes the betting area 74. This layout also includes a player hand area 71 for placing player hands and a banker hand area 72 for placing banker hands on the dealer side of the display surface 111. Furthermore, this layout includes an accumulated prize money amount (carry-over amount) 73 for jackpot which is a lottery game described below, between the player hand area 71 and the banker hand area 72.

The betting area 74 includes the betting targets for the plural players. In the example in FIG. 5, the plural betting targets are respectively provided for six player positions (1-6) for six players. The betting area 74 for each player position is arranged side by side in a lateral direction.

The betting area 74 for each player position is provided with a "PLAYER" area for betting on PLAYER WIN, a "BANKER" area for betting on BANKER WIN, a "TIE" area for betting on TIE, a "P.P." area for betting on PLAYER PAIR, a "B.P." area for betting on BANKER PAIR, and a "J.P." area for challenging the jackpot.

In the betting area 74 for each player position, a row of the "PLAYER" area, a row of the "BANKER" area, a row of the "P.P." area and "B.P." area, and the row of the "J.P." area and "TIE" area are arranged in line in a longitudinal direction.

When the betting stage starts, the cameras 21, 23 continuously take a picture at a predetermined frame rate and send sequentially generated pictures to the arithmetic device 6. The picture recognizing device 61 of the arithmetic device 6 analyzes the pictures acquired from the cameras 21, 23 and whereby recognizes a position, type, and number of gaming chip 9 shown in the pictures.

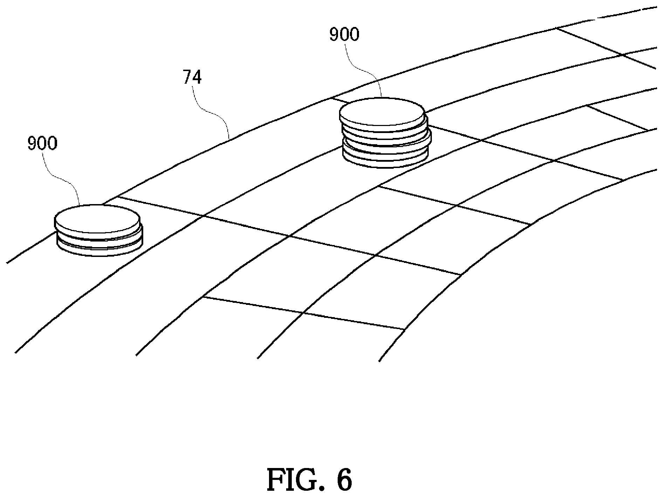

FIG. 6 is a view showing an example of a part of an image which the camera for taking a picture of the gaming chip takes a picture to generate according to the embodiment of the present invention. Since the betting target in the betting area 74 is also shown in the picture, the picture recognizing device 61 recognizes the betting target on which the gaming chip 9 has been bet by recognizing the position of the gaming chip 9.

As described above, the plural gaming chips 9 may be stacked up and placed as the chip stack 900 in the betting area 74. In this case, the picture recognizing device 61 recognizes a position of the chip stack 900, i.e., the betting target on which the chip stack 900 has been bet. As described above, the cameras 21, 23 take a picture of the betting area 74 displayed on the display surface 111 from diagonally above, and therefore, can take a picture of the betting target on which the chip stack 900 is placed and also can take a picture of the side surface of each gaming chip 9 in the chip stack 900.

As described above, since the side surface of the gaming chip 9 includes the pattern representing the type of gaming chip 9, the picture recognizing device 61 analyzes the picture and thereby can judge the type of gaming chip 9 included in the chip stack 900. Since the type of gaming chip 9 corresponds to the value of gaming chip 9, the picture recognizing device 61 can recognize the value of each gaming chip 9 included in the chip stack 900. Furthermore, the picture recognizing device 61 sums the values of plural gaming chips 9 constituting the chip stack 900 and thereby can calculate a total amount of chip stack 900.

In the way described above, the picture recognizing device 61 analyzes the pictures obtained from the cameras 21, 23 and thereby recognize a betting amount for each betting target in the betting area 74 as the betting contents. A machine learning model or a deep neural network trained by learning can be used for analyzing the picture in the picture recognizing device 61. Specifically, the picture recognizing device 61 may recognize the betting contents by performing individually plural process of a process of performing segmentation of the chip stack 900 from inside the image, a process of recognizing each gaming chip 9 by extracting a characteristic part (e.g., center line) of each gaming chip 9 from the chip stack 900, a process of identifying the type for each gaming chip 9, a process of identifying the betting target on which the chip stack 900 is placed, and the like. In this case, different machine learning models or different neural network models may be used for the respective processes.

The picture recognizing device 61 performs the above processes for the picture from the camera 21 and the picture from the camera 23, respectively. As described above, any of the camera 21 and camera 23 take a picture of the entire betting area 74, and therefore, in principle, the gaming chip 9 placed on the betting area 74 is captured by both of the camera 21 and camera 23. However, depending on a positional relationship between the plural chip stacks 900, some or all of the gaming chips 9 in one chip stack 900 may be captured by only one of the cameras 21 and 23 and not by the other since it is behind the other chip stack 900. Even in such case, any of the chip stacks 900 is captured by any of the cameras 21 and 23 and recognized by the image recognizing device 61.

The picture recognizing device 61 recognizes as the same chip stack 900 the chip stack 900 recognized to be placed on the same position, for the chip stack 900 recognized from the image from the camera 21 and the chip stack 900 recognized from the image from the camera 23.

When the chip stack 900 is recognized in the picture recognizing device 61, the image generating device 64 generates an image which displays a mark indicating that the gaming chip 9 have been detected and displays a number indicating the total amount of chip stack 900 at a position corresponding to the position of the chip stack 900 on the display surface 111.

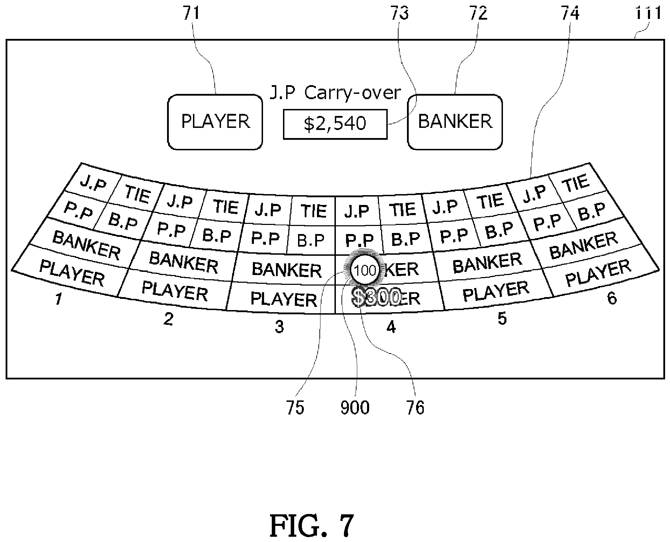

FIG. 7 is a view showing a display example of the display surface according to the embodiment of the present invention. The example in FIG. 7 shows a situation in which a chip stack 900 consisting of three $100 chips and totaling to $300 is placed in a "BANKER" area at a player position "4". As described above, the picture recognizing device 61 analyzes the pictures from the cameras 21, 23 and thereby recognizes the position of the chip stack 900, and therefore, the image generating device 64 generates an image displaying a mark (betting mark) 75 at the recognized position. The betting mark 75 is a circular mark having a diameter slightly larger than a diameter of the gaming chip 9. A number 76 representing a total amount of the chip stack 900 is displayed at a position which is in a predetermined positional relationship with the betting mark 75.

The image generating device 64 may correct the position of the betting mark 75 by feedback control. That is, since the cameras 21, 23 continue to take a picture after displaying the betting mark 75 as described above, an image in which the betting mark 75 is displayed is input to the picture recognizing device 61. At this time, the picture recognizing device 61 may recognize a positional relationship between the chip stack 900 and the betting mark 75 and output its result to the image generating device 64. The image generating device 64 may generate an image in which the position of the betting mark 75 is corrected by a movement amount in accordance with the positional relationship between this chip stack 900 and the betting mark 75, i.e., a difference amount between the chip stack 900 and the betting mark 75.

A pattern (shape, color) of the betting mark 75 may be what varies depending on the total amount of chip stack 900. For example, the betting mark 75 may be displayed in different colors and/or different shapes from each other for respective cases where the total amount of chip stack 900 is less than $100, less than $1000, and more than $1000.

These betting mark 75 indicating the position of the chip stack 900 and number 76 indicating the total amount of chip stack 900 may be displayed for a predetermined time after the chip stack 900 has been recognized, and then disappear. The image generating device 64 generates an image in which these betting mark 75 and number 76 are displayed and then disappear after the predetermined time. In this way, the number 76 indicating the betting amount are displayed in real time at each time when the bet chip stack 900 is recognized using the cameras 21 and 23 and the picture recognizing device 61. When the player reduces or increases the betting amount, the cameras 21, 23 and picture recognizing device 61 re-recognize the chip stack 900, judge the betting amount, and re-display a number 76 indicating a new betting amount.

The image generating device 64 also identifies a player position in which an amount bet on the "PLAYER" area is highest and a player position in which an amount bet on the "BANKER" area is highest, and displays marks 77 (squeezing marks) indicating that the players in the player positions are entitled to squeeze the corresponding hands, respectively.

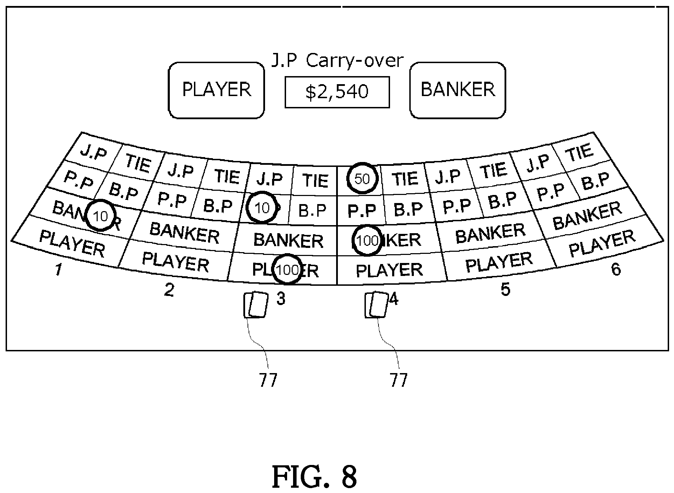

FIG. 8 is a view showing a display example of the display surface according to the embodiment of the present invention. In the example in FIG. 8, a player position 3 is that in which an amount bet on the "PLAYER" area is highest, and a player position 4 is that in which an amount bet on the "BANKER" area is highest, and therefore, the squeezing marks 77 are displayed in respective player positions.

The image generating device 64 may display the squeezing mark 77 at a player position in which the highest amount has been bet at that time point and change the player position at which the squeezing mark 77 is displayed at each time when the player position in which the highest amount has been bet changes in the betting stage, or alternatively, the squeezing mark 77 may be displayed only after the betting stage ends and all betting contents in the betting area 74 have been fixed.

When the betting stage ends and the dealer starts the card dealing stage in which the card is dealt, the image generating device 64 switches the image displayed on the display surface 111. For this purpose, the card shoe 3 as the game judging device sends a signal to the arithmetic device 6 when the first playing card has been drawn.

The arithmetic device 6 judges that the first card has been drawn, i.e., the betting stage ends and the card dealing stage starts based on the signal from the card shoe 3. Alternatively, the dealer may perform a "NO MORE BET" action at the table upper surface (typically, facing the palm down and swiping over a space above the betting area 74), any of the cameras 21-24 may capture this, and the picture recognizing device 61 may recognize this action, and thereby it may judge that the betting stage ends and the card dealing stage starts.

The image generating device 64 displays distinguishably a betting target on which the gaming chip 9 has been bet and a betting target on which the gaming chip 9 has not been bet after the betting stage ends and the betting contents have been fixed. Specifically, the image generating device 64 erases the display of the betting target on which the gaming chip 9 has not been bet and maintains the display of the betting target on which the gaming chip 9 has been bet, and thereby displays to emphasize the betting target on which the gaming chip 9 has been bet.

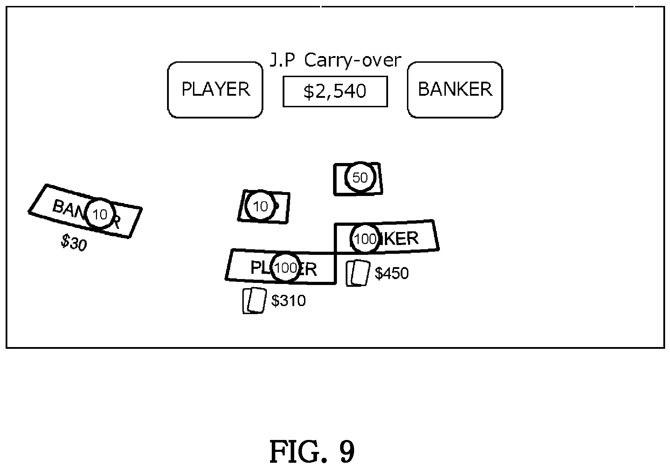

FIG. 9 is a view showing a display example of the display surface according to the embodiment of the present invention. In this image, only betting targets in which the gaming chips 9 have been bet are displayed, and betting targets in which the gaming chip 9 has not been bet are not displayed. Moreover, in this example display, squeezing marks 77 are shown in corresponding player positions. Furthermore, in this example display, total amounts of betting amounts for respective player positions are shown.

As described above, the game judging device 3 reads the ranks of the playing cards that are being drawn one by one to judge the game result. The game judging device 3 sends the judged game result to the arithmetic device 6. The settlement judging device 62 of the arithmetic device 6 performs a settlement judgment based on the betting contents judged by the picture recognizing device 61 and the game result judged by the game judging device 3.

When betting on the jackpot, before the settlement judging device 62 performs the settlement judgement, the lottery executing device 63 executes a lottery game. A lottery result is either a win or a loss. The lottery executing device 63 draws lots using a random number to obtain a winning or losing lottery result. The image generating device 64 generates an image improving an interest quality of the lottery game when the lottery executing device 63 executes the lottery game.

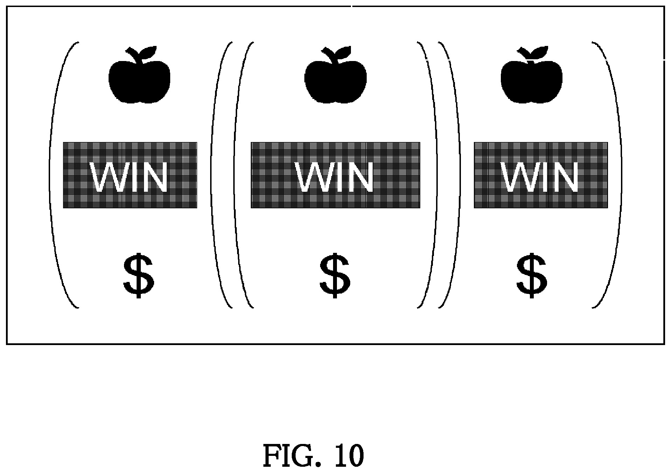

FIG. 10 is a view showing a display example of the display surface of the according to the embodiment of the present invention. In FIG. 10, a lottery game is displayed. An image of the lottery game is an image of a slot game including three reels. When the lottery result is a win, the image generating device 64 generates an image in which the reels are turned and then stopped one by one, and a winning pattern is finally aligned. When the lottery result is a loss, the image generating device 64 generates an image in which the reels are turned and then stops one by one, and the winning pattern is not finally aligned.

As mentioned above, a jackpot prize money is an accumulated amount of betting amount on the jackpot which has been lost in the lotteries and collected at the plural gaming tables in a casino until a win occurs (carry-over amount). Therefore, the prize money is what is accumulated at each time when losing in the lottery at other gaming table and reduced when winning the lottery at one gaming table, and changes from moment to moment in such manner. Therefore, the image generating device 64 receives a carry-over amount based on betting on the jackpot and its lottery result at other gaming table at a predetermined time interval (e.g., each 5 second) and updates the carry-over amount displayed on the display surface, regardless of whether in the betting stage or in the card dealing stage.

A participation fee (betting amount) to the jackpot is a fixed amount ($50 in the present embodiment). When a gaming chip 9 is bet in the "J.P." area, but the amount is not $50 as a result in judging the betting contents, the picture recognizing device 61 judges that it is illicitness and report it to the image generating device 64. The image generating device 64 generates an image displaying a warning at a position of the gaming chip 9 related to the illicit betting amount on the jackpot.

The lottery of the jackpot ends, and then transiting to the settlement stage. The settlement includes the collection of the losing gaming chip 9 and the redemption for the winning gaming chip 9. The image generating device 64 displays an image in accordance with the settlement judged by the settlement judging device 62. The settlement judging device 62 judges whether the gaming chip 9 should be collected (lost the game) or the redemption for the gaming chip 9 should be received (won the game), for each chip stack 900 of the gaming chip 9 which have been bet or for each betting target on which the gaming chip 9 have been bet. Furthermore, it calculates the redemption amount according to game rules for the chip stack 900 judged that the redemption for the gaming chip 9 should be received.

The image generating device 64 generates an image which displays, in association with the chip stack 900 of the gaming chip 9 which have been bet or in association with the betting target on which the gaming chip 9 have been bet, whether it should be collected or the redemption for it should be received, and displays, in association with the chip stack 900 of the gaming chip 9 for which the redemption is to be received or in association with the betting target for which the redemption is to be received, the redemption amount.

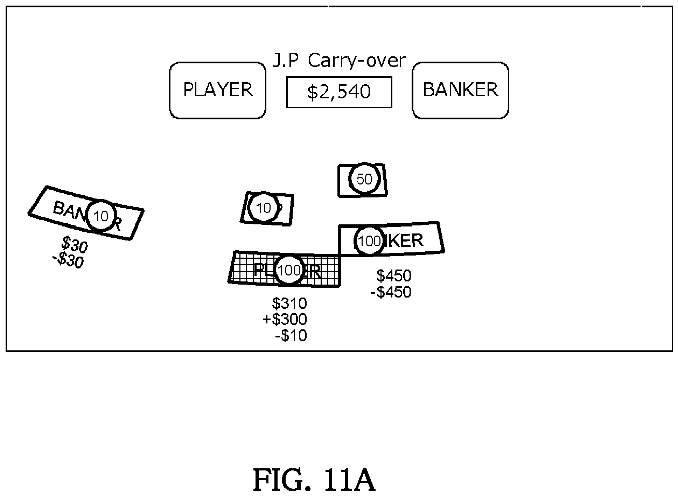

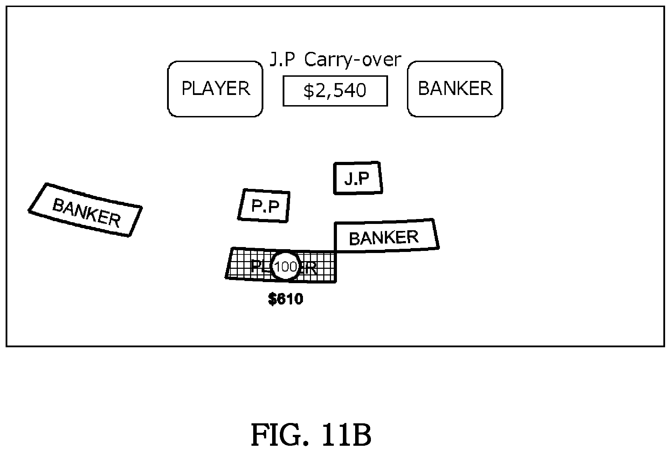

FIGs. 11A and 11B are views showing a display example of the display surface according to the embodiment of the present invention. In the example of FIGs. 11A and 11B, the image generating device 64 shows a display example of the display surface 111 in a case where the jackpot is lost and the game result is PLAYER WIN. In this case, the "PLAYER" area which is the betting target which has won the game is emphasized with colored, and the other areas which are the betting targets which have lost the game are shown with not colored.

As shown in FIG. 11A, a column of numbers representing the settlement is displayed at each player position. In order from the top row, a betting amount, a redemption amount (when there is a redemption), and a collection amount (when there is a collection) are displayed in that order. The image generating device 64 displays, from that display, a final settlement amount which adds or subtracts these amounts, as shown in FIG. 11B. When the entire amount is collected (when no gaming chip 9 is left on the place after the settlement, i.e., when the settlement amount is 0), nothing is displayed.

The image generating device 64 may generate an image which gradually decreases the redemption amount as gradually increasing the betting amount and gradually decreases the collection amount (minus) as gradually decreasing the betting amount, for a transition from the display in FIG. 11A to the display in FIG. 11B. Moreover, in a case where a jackpot is won, the image generating device 64 may generate an image which gradually decreases the carry-over amount 73 displayed in front of the dealer as gradually increasing the redemption amount of the player position.

The settlement judging device 62 may judge whether the settlement has been accurately performed or not. In this case, the cameras 21 and 23 continue to take a picture in the settlement stage, and the picture recognizing device 61 recognizes the gaming chip 9 on the gaming table 1 including the gaming chip 9 which is redeemed in the settlement stage. The settlement judging device 62 can judge whether a correct amount according to a rule has been redeemed for the gaming chip 9 which has won the game, based on a recognizing result.

In addition to or instead of the above, the settlement judging device 62 may also judge whether the settlement has been correctly performed based on an increase or decrease amount of gaming chip 9 in the chip tray 5.

In the case where the settlement judging device 62 judges whether the settlement has been performed correctly, the image generating device 64 may generate an image which represents a judging result and, when there is an illicit settlement, indicates the betting target at which the illicitness occurred.

In the way described above, the game system according to the present embodiment can not only display the image in accordance with the progress of the game on the display surface 111 constituting at least a part of the table upper surface 11, but also can display the image in accordance with the game result of the game using the physical playing card and the betting contents of the bet using the physical gaming chip 9. These displays are a display guiding the player to the game, a display improving the interest quality of the game, a display supporting the dealer in the operation such as the settlement, and a display for confirming the accuracy of the various operations of the game.

In the above embodiment, the display surface 111 is the screen having the light transmissive property, and the image control device 7 is the projector configured to project the image onto the screen from below the table upper surface 11, but the display surface 111 and image control device 7 are not limited to these.

For example, the image control device 7 may be a display device configured to display an image. In this case, the display surface 111 is a display panel of the display device. The display device may be a liquid crystal display device. Alternatively, the display surface 111 may be a screen not having the light transmissive property, and, in this case, the image control device 7 may be a projector configured to project an image onto the screen from above the table upper surface 11. That is, a projection mapping may be performed on the display surface 111.

In the above embodiments and variant examples thereof, the display surface 111 may be covered with a cloth for improving a feel. Alternatively, the display surface 111 may be provided with a touch sensor, and various information may be displayed to be switched by touch operation.

The cameras 22, 24 generate the pictures including the player and the bet gaming chip, as described above. The picture recognizing device 61 may analyze these pictures, and thereby associates the player with the bet chip stack 900 and judges the betting content for each player. By this, it is possible to perform a patron rating.

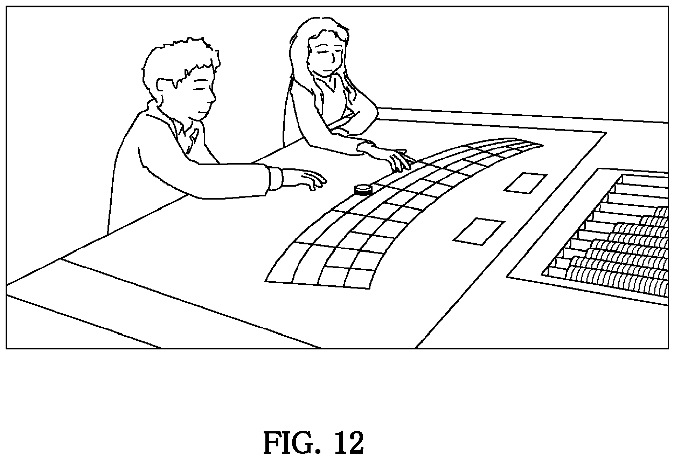

FIG. 12 is a view showing an example of a picture which the camera for taking a picture of the player and the gaming chip takes a picture to generate according to the embodiment of the present invention. The camera 22, 24 can obtain a picture of a larger area than that of the camera 21, 23. The picture recognizing device 61 analyzes the picture generated by the camera 22, 24, and thereby recognizes a skeletal model of the player from the picture, and further recognizes the chip stack 900, and identify which player has placed the chip stack 900 and which chip stack 900 the player has placed on the betting area 74 based on a positional relationship between the chip stack 900 and the hand of the skeletal model.

In this way, since the picture recognizing device 61 recognizes the player, the image generating device 64 may generate an image of a betting area based on a number and position of player. Specifically, the image generating device 64 may generate an image of a betting area having a betting target for each player, for the number of player. Alternatively, the image generating device 64 may generate an image of a betting area having a betting target for a player according to a position at which the player presents.

The image generating device 64 may generate an image including background animation in addition to the displays described above in each stage of the betting stage, card dealing stage, and settlement stage.

Moreover, in the present embodiment, in order to judge the betting contents, the bet gaming chip 9 is taken a picture by the camera, and a picture is generated and analyzed, and thereby, the position of the chip stack 900, and the type and number of gaming chip 9 included in the chip stack 900 are recognized, but instead of or in addition to this, the betting contents may be judged by embedding an RFID antenna within the display surface 111 and reading the RFID tag 94 of the bet gaming chip 9.

In the above embodiments, the judgment of the game result is performed by reading the ranks of the playing cards being drawn one by one by the card shoe 3. In addition to or instead of this, the game result may be judged by reading the cards that has been drawn and opened on the table upper surface 11 by a camera. In this case, for example, the camera 21, 23 takes a picture of a region including also an area on which the playing card is placed (player hand area 71 and banker hand area 72). The picture recognizing device 61 recognizes the playing card in the image, and thereby judges the rank of each hand, and judges the game result according to rules.

In addition to the image generating device 64 and the image control device 7, an audio generator and audio output device may be provided and output an audio together with the image. For example, when the picture recognizing device 61 detects that the gaming chip 9 has been bet, an audio indicating that the gaming chip 9 has been detected may be output according to this.

The display of the display surface 111 may be turned off when a player does not present, and a human sensor configured to detect a player may be provided or the image recognition by the camera 22, 24 may be continued, and, when a first player sits at the gaming table 1 in a state where no player presents, and the display surface 111 may be turned on by detecting it. Moreover, the display surface 111 may be automatically turned off or put into a sleep state when a predetermined time has elapsed since a player is no longer detected. When detecting the first player and starting the display of the display surface 111, an animation at the start for welcoming the player may be displayed.

In the above embodiments, the jackpot is executed by performing the lottery using the random number by the lottery executing device 63, but alternatively, a win or lose of the jackpot may be judged on the basis of the ranks of the playing cards which has been drawn from the card shoe 3. For example, the jackpot may be judged to be a win when the ranks of the first four playing cards drawn are all the same. In this case, the card shoe 3 as the game judging device functions as the lottery executing device. In this case, the image of the lottery game may also be displayed on the display surface 111 as similar to the above embodiments.

Moreover, in the above embodiments, the example displaying the layout for baccarat is described, but the image generating device 64 may be capable of generating images of multiple types of layouts for baccarat, for example, may generate and display an image of different type of layout for each day. The image generating device 64 may also be capable of generating images of layouts for games other than baccarat, such as blackjack, Sic Bo, etc., and may select and display an image of layout in accordance with a game played at the gaming table 1. Further, the image generating device 64 may generate and display an image of a layout in which a number, size, spacing, etc. of betting area for each player position is adjusted according to a number of player participating in a game, recognized by the picture recognizing device 61. Moreover, a part of a layout may be printed on the table upper surface 11, and the layout may be completed together with an image of the layout generated and displayed by the image generating device 64.

The image generating device 64 may also generate an image displaying a sum value of the ranks of the playing cards dealt on the gaming table 1 from the card shoe 3 as the game judging device. Specifically, for baccarat, the image generating device 64 may calculate a sum value or a digit in the ones place of the sum value of the ranks of the plural playing cards constituting the player hand as a player hand value and calculate a sum value or a digit in the ones place of the sum value of the ranks of the plural playing cards constituting the banker hand as a banker hand value, and generate and display an image including these values. Furthermore, in baccarat, after two cards have been dealt to a player and a banker respectively, when cards should be further dealt on the basis of rules, the image of the hand value of a hand to which the cards should be further dealt may be flashed on and off. That is, when a third card should be dealt to the player, the sum value or the digit in the ones place of the sum value of the first two cards dealt to the player may be displayed flashing on and off. For the banker, similarly, when a third card should be dealt to the banker, the sum value or the digit in the ones place of the sum value of the first two cards dealt to the banker may be displayed flashing on and off. Moreover, for blackjack, it may calculate a sum value or a digit in the ones place of the sum value of ranks of plural playing cards constituting each of hands of each player and dealer, and generate and display an image including these values.

The image generating device 64 may also generate and display a tutorial image which guides the player through a game. Specifically, in baccarat or blackjack, the image generating device 64 may generate and display an image which guides the player through, in a stage where some playing card of each hand have been dealt, which rank of the playing card will be dealt next will make the hand advantageous or win the game.

In particular, the image generating device 64 may generate a tutorial image for a beginner of a game as follows. That is, the image generating device 64 may generate an image including an explanation of winning conditions of a player based on the betting contents of each player recognized by the picture recognizing device 61. When minimum bet or maximum bet conditions are set, the image generating device 64 may generate an image including a warning when the set minimum bet or maximum bet conditions are not met. Rules of each game and winning conditions of a main bet and a side bet may be always displayed on the gaming table, and moreover, the display and non-display may be switched with each other by detecting an operation or hand movement of the player or dealer.

When a new wager can be performed on the basis of certain conditions in the middle of a game, the image generating device 64 may also generate and display an image informing a player of it and an image displaying a new betting area and a payout ratio. For example, in blackjack, when a bet such as insurance, double down, split, etc., is possible on the basis of recognition of drawn cards, it may generate and display an image encouraging the player to bet. In baccarat, it is also possible to perform "insurance" which is a new wager in the middle of a game. For example, when a player (a game participant) has bet on the banca, it is possible to perform "banca insurance" which is an additional wager on that the banca will lose, on the middle of the game. When it is possible to wager on the banca insurance based on cards dealt to the player and banca, a new betting area for the banca insurance may be displayed. Furthermore, a payout multiplier for such new wager may be calculated on the basis of the dealt cards, and displayed. A maximum amount which can be wagered (maximum bet) may also be calculated and displayed, and an alert may be displayed when a bet amount exceeds the maximum bet. Furthermore, a win rate of a wager (a theoretical probability of that the wager will win) may be calculated and displayed. When having bet on a player, the same may be true in a case of "player insurance" which is a wager on that the player will lose, on the middle of a game.

An image of a history of past win/loss results at the gaming table may be generated and displayed, and data of the history may be updated and displayed at each time when each game ends.

A button configured to be pressed by a foot of the dealer may be arranged below the foot of the dealer, a change of a layout and a switch of images displayed during a game may be performed by the button. The change of the layout may be changing of a type of targeted game (e.g. baccarat or blackjack) or changing to a different layout in the same game. The switch of the images during the game includes displaying the digit in the ones place of the sum value of the ranks of the drawn cards, displaying a win/lose result of a game, and displaying the collecting amount of the losing chip and the redemption amount for the winning chip.

The part describing that the image generating device 64 "generates" an image includes that the image generating device 64 selects an appropriate one among plural images that have already been generated and prepared, and further includes that the image generating device 64 selects an appropriate one from among plural images that have already been generated and prepared, and process the selected image, or superimposing another image on the selected image.

### DESCRIPTION OF THE REFERENCE

- 100: Game system
- 1: Gaming table
- 3: Card shoe (game judging device)
- 4: Disposal box
- 5: Chip tray
- 6: Arithmetic device
- 7: Projector (image control device)
- 9: Gaming chip
- 11: Table upper surface
- 21-24: Camera
- 51: Antenna
- 52: RFID reader
- 61: Picture recognizing device
- 62: Settlement judging device
- 63: Lottery executing device
- 64: Image generating device
- 71: Player hand area
- 72: Banker hand area
- 73: Accumulated prize money amount (carry-over amount)
- 74: Betting area
- 75: Betting mark
- 76: Number
- 77: Squeezing mark
- 91: Centerline
- 92: Upper or lower layer
- 93: Insert
- 94: RFID tag
- 111: Display surface
- 900: Chip stack

## Claims

1. A game system for performing a game using a gaming chip and a playing card, the game system comprising:
a table including a table upper surface including a display surface;
a camera configured to take a picture of the gaming chip bet on the table upper surface to generate a picture;
a picture recognizing device configured to analyze the picture and thereby recognize betting contents;
a game judging device configured to read contents of the playing card to be dealt on the table upper surface to judge a game result; and
an image control device configured to display on the display surface an image of a layout of a betting area including plural betting targets on which betting for the game is to be performed by placing the gaming chip, and display on the display surface an image whose contents change in accordance with the betting content and/or the game result according to the betting content recognized by the picture recognizing device and/or the game result judged by the game judging device.

2. The game system according to claim 1, wherein the image control device is configured to display the layout at least in a betting stage.

3. The game system according to claim 2,
the game system further comprising a disposal sensor configured to detect that the playing card is inserted into a disposal box for disposing the playing card used in the game, wherein
the image control device is configured to display the layout for a next game when the disposal sensor detects the playing card.

4. The game system according to claim 2, wherein the picture recognizing device is configured to analyze the picture and thereby recognize a position, type, and number of gaming chip, and recognize a betting amount for each betting target as the betting contents based on the position, type, and number thereof.

5. The game system according to claim 4, wherein the image control device is configured to display a mark indicating that the gaming chip has been detected at the position recognized by the picture recognizing device.

6. The game system according to claim 5, wherein the image control device is configured to display a mark in accordance with the betting amount recognized by the picture recognizing device at each position recognized by the picture recognizing device.

7. The game system according to claim 4, wherein the image control device is configured to display a number indicating the betting amount recognized by the picture recognizing device near each image-recognized position.

8. The game system according to claim 4, wherein the image control device is configured to display a mark indicating that the betting amount is highest amount, in association with the betting target including the highest betting amount, for each type of betting target in the game.

9. The game system according to claim 2, wherein the image control device is configured to distinguishably display the betting target on which the gaming chip have been bet and the betting target on which the gaming chip have not been bet, after the betting stage ends and the betting contents is fixed.

10. The game system according to claim 9, wherein the image control device is configured to erase a display of the betting target on which the gaming chip have not been bet, after the betting stage ends and the betting contents is fixed.

11. The game system according to claim 1,
the game system further comprising a settlement judging device configured to judge settlement based on the betting contents recognized by the picture recognizing device and the game result judged by the game judging device, wherein
the image control device is configured to display an image in accordance with the settlement judged by the settlement judging device, in a settlement stage.

12. The game system according to claim 11, wherein
the settlement judging device is configured to judge whether the gaming chip should be collected or redemption for the gaming chip should be received, for each stack of the gaming chip which has been bet or for each betting target on which the gaming chip has been bet, and
the image control device is configured to perform a display indicating a judging result by the settlement judging device, whether it should be collected, in association with the stack of the gaming chip which has been bet or in association with the betting target on which the gaming chip has been bet.

13. The game system according to claim 12, wherein
the settlement judging device is configured to judge a redemption amount for the gaming chip, and
the image control device is configured to display the redemption amount in association with the stack of the gaming chip for which the redemption is to be received or in association with the betting target for which the redemption is to be received.

14. The game system according to claim 2, wherein
the betting target includes participation in a lottery game,
the game system further comprises a lottery executing device configured to execute a lottery when the picture recognizing device recognizes that, as the betting contents, the gaming chip is bet for the participation in the lottery game, and
the image control device is configured to display an image of the lottery game.

15. The game system according to claim 14, wherein the image control device is configured to display a carry-over amount of the lottery game in the betting stage.

16. The game system according to claim 1, wherein
the display surface is a screen having light transmissive property, and
the image control device is a projector configured to project the image onto the screen from below the table upper surface.

17. The game system according to claim 1, wherein
the image control device is a display device configured to display the image, and
the display surface is a display panel of the display device.

18. The game system according to claim 1, wherein
the display surface is a screen, and
the image control device is a projector configured to project the image onto the screen from above the table upper surface.

19. A game system for performing a game using a gaming chip, the game system comprising:
a table including a display surface configured to display an image wherein the display surface is a table upper surface;
a camera configured to take a picture of the gaming chip placed on the table upper surface to generate a picture;
a picture recognizing device configured to analyze the picture and thereby recognize a position, type, and number of gaming chip placed on the table upper surface; and
an image control device configured to display on the display surface an image in accordance with a recognizing result by the picture recognizing device.

20. The game system according to claim 19,
the game system further comprising a judging device configured to judge a game result, and
the image control device is further configured to display on the display surface an image in accordance with a judging result by the judging device.

21. A game system for performing a game using a gaming chip and a playing card, the game system comprising:
a table including a table upper surface including a display surface configured to display an image;
a camera configured to take a picture of the gaming chip bet on the table upper surface to generate a picture;
a picture recognizing device configured to analyze the picture and thereby recognize betting contents;
a game judging device configured to read contents of the playing card which is to be dealt on the table upper surface to judge a game result; and
an image control device configured to display on the display surface an image in accordance with the betting contents recognized by the picture recognizing device and the game result judged by the game judging device.
